# EUROPÄISCHE PATENTSCHRIFT

(11) **EP 1 270 701 B1**
(45) Veröffentlichungstag und Bekanntmachung des Hinweises auf die Patenterteilung: **13.07.2011**
(21) Anmeldenummer: 02012009.3
(22) Anmeldetag: 31.05.2002
(51) Int. Cl.: C09J 153/00, C08F 293/00, C08F 290/04

(54) **Haftklebemasse insbesondere für unpolare Oberflächen**
Adhesive particularly for unpolar surfaces
Adhésif destiné, en particulier, à des surfaces non polaires

(30) Priorität: 20.06.2001 DE 10129611
(43) Veröffentlichungstag der Anmeldung: 02.01.2003
(73) Patentinhaber: TESA SE, 20253 Hamburg (DE)
(72) Erfinder: Husemann, Marc, Dr., 22605 Hamburg (DE); Zöllner, Stephan, Dr., 21244 Buchholz/Nordheide (DE)

(56) Entgegenhaltungen:
- EP-A- 0 921 170
- US-A1- 2001 044 024

## Beschreibung

Die Erfindung betrifft Haftklebemassen auf Basis von Blockcopolymeren, wobei die Blockcopolymere mindestens die Einheit P(A)-P(B)-P(A) aus einem mittleren Polymerblock P(B) sowie aus zwei den mittleren Polymerblock P(B) umschließende Polymerblöcke P(A) oder die Einheit P(B)-P(A)-P(B) aus einem mittleren Polymerblock P(A) sowie aus zwei den mittleren Polymerblock P(A) umschließende Polymerblöcke P(B) enthalten, die Verwendung solcher Haftklebemassen sowie ein Verfahren zu deren Herstellung.

In der Industrie sind Heißschmelzverfahren (Hotmeltverfahren) mit lösungsmittelfreier Beschichtungstechnik zur Herstellung von Haftklebemassen von anwachsender Bedeutung. Allgemein fördern Umweltauflagen und steigende Kosten den Entwicklungsprozeß derartiger Haftklebemassen. Neben SIS-Systemen (Styrol/Isopren/Styrol-Copolymeren) werden zunehmend Acrylat-Polymere aus der Schmelze als Polymerschicht auf Trägermaterialien aufgetragen. Weiterhin werden für spezielle Anwendungen Haftklebebänder mit einem sehr geringen Ausgasungsverhalten benötigt. Dies kann nur durch Hotmeltverfahren gewährleistet werden, da konventionelle Beschichtungen aus der Lösung immer noch geringe Anteile an Restlösemittel enthalten.

Weiterhin steigt der Bedarf für Acrylathaftklebemassen auf unpolaren Oberflächen. In der Industrie wird der Einsatz von Kunststoffen - auf Grund der Gewichtsreduzierung gegenüber konventionellen Metallen - forciert, dementsprechend werden immer mehr Verklebungen auf diesen Substraten vorgenommen. Da Polyacrylate durch die Vielzahl ihrer Estergruppierungen relativ polar sind, lassen nur entsprechend polare Harze zur Klebkraftverstärkung einsetzen. Diese weisen zwar eine gute Klebkraft auf polaren Oberflächen wie Stahl auf, bieten aber nur mittelmäßige Klebkräfte auf unpolaren Oberflächen, welche für die meisten Anwendungsgebiete nicht ausreichend sind.

In der US 4,418,120 A werden vernetzte Haftklebemassen mit Kolophonium-Ester-Harzen beschrieben, die eine gute Klebkraft auf Polypropylen besitzen. Durch den ungesättigten Charakter des Harzes weisen diese Haftklebemassen aber eine geringe UV-Stabilität auf. Auch die Klebkräfte auf den unpolaren Oberflächen sind relativ gering. In der US 4,726,982 A sind vernetzte Haftklebemassen mit hoher Klebkraft zu Farben und Lacken beschrieben. Die Copolymerisate aus Acrylestern und N-Vinyl-2-Pyrrolidon werden mit Klebrigmachern wie Poly(isobornylmethacrylat), Pentaerythrolestern der Kolophonium-Harze und gemischten aliphatischen/aromatischen Harzen abgemischt. Auch hier werden relativ polare Harze zur Erhöhung der Klebkraft auf unpolaren Oberflächen eingesetzt. Die zumeist beschriebenen Klebrigmacher besitzen jedoch ungesättigte Verbindungen, die im Hotmelt-Prozess zu Vergelungen führen können, wobei zusätzlich die ungesättigten Verbindungen nach der Verklebung unter UV-Licht altern oder verwittern und sich somit die klebtechnischen Eigenschaften über einen längeren Zeitraum verschlechtern.
In der EP 0 707 604 A1 werden Polyethylen/-butylen-Makromonomere zur Copolymerisation mit Acrylaten eingesetzt. Hierdurch bilden sich Phasen mit einer geringen Glasübergangstemperatur, die wiederum die Klebemassen auf unpolaren Oberflächen auffließen lassen und somit hohe Kiebkräfte auf PE und PP gewährleisten. Nachteilig ist der schlechte Umsatz des beschriebenen Polymerisationsverfahrens. Zudem werden die Makromonomere statistisch copolymerisiert, so daß sich keine Domänen ausbilden können. Solche Domänen böten Bereiche, in denen auch sehr unpolare Harze löslich wären. Daher wird mit diesen Haftklebebändern eine nur relativ geringe Klebkraft auf unpolaren Oberflächen erzielt.
Weiterhin lassen sich die beschriebenen Polyacrylate nur sehr schwer als Hotmelt verarbeiten, da die hohen Restmonomeranteile den Aufkonzentrationsprozeß negativ beeinflussen und Migrationen im Haftklebeband die langfristigen klebtechnischen Eigenschaften negativ beeinflussen können.

Dagegen sind Styrol-lsopren-Styrol-Blockcopolymere (SIS) weit verbreitete Elastomere für Hotmelt-verarbeitbare Haftklebemassen [Herstellverfahren: US 3,468,972 A; US 3,595,941 A; Anwendung in Haftklebemassen: US 3,239,478 A; US 3,935,338 A] mit hoher Klebkraft auf unpolaren Oberflächen. Die gute Verarbeitbarkeit wird durch ein geringeres Molekulargewicht und durch eine spezielle Morphologie erreicht [EP 0 451 920 B1]. Diese Haftklebemassen sind sehr gut mit UV-Licht unter Anwesenheit von Photoinitiatoren oder mit Elektronenstrahlung vernetzbar, da die Mittelblöcke eine Vielzahl von Doppelbindungen enthalten.
Dennoch besitzen diese Elastomere Nachteile, wie beispielsweise eine starke Alterung unter UV-Licht (also auch im Tageslicht) und in einer Sauerstoff/Ozon-haltigen Atmosphäre. Eine weitere für die Anwendung sehr ungünstige Eigenschaft ist die relativ geringe Wärmescherfestigkeit. Diese Haftklebemassen sind daher für längerfristige Außenverklebungen und für Anwendungen in höheren Temperaturbereichen nicht geeignet. Zudem wird durch die Hart-Block-Domänenbildung aus den harten Polystyrolendblöcken ein gutes Auffließen auf unpolare Oberflächen verhindert. Dasselbe gilt auch für andere Blockcopolymere, die einen zumindest eine Doppelbindung enthaltenden Mittelblock besitzen [US 5,851,664 A].
Eine Lösung der Alterungsproblematik, der Hotmeltverarbeitbarkeit, der hohen Kohäsion und der effizienten strahlenchemischen Vernetzung liefert die Kombination aus SIS-Polymeren und Polyacrylaten.
In der US 5,314,962 A werden A-B-A-Blockcopolymere als Elastomere für Klebemassen beschrieben, die als kohäsionsbildendes Kriterium die A-Domänenbildung besitzen. Durch die Auswahl der verwendeten Comonomere lassen sich aber auf unpolaren Oberflächen nur geringe Klebkräfte realisieren. Zudem sind diese Polymere nicht mit sehr unpolaren Harzen verträglich.

In der EP 0 921 170 A1 werden A-B-A-Blockcopolymere beschrieben, die mit Harzzusätzen modifiziert wurden. Auch hier sind - bedingt durch die Auswahl der Comonomere und zugesetzten Harze - nur geringe Klebkräfte auf unpolaren Oberflächen zu realisieren.

In der EP 0 408 429 A1 und EP 0 408 420 A1 sind A-B-A-Blockcopolymere beschrieben worden, die aber über lebende anionische Polymerisation synthetisiert wurden. Diese Polymere sind aber auf Grund des fehlenden Acrylsäureanteils als Haftklebemassen nicht geeignet, da die innere Kohäsion des Mittelblocks zu gering ist und für Verklebungen auf Stahl ein zumindest geringer Anteil polarer Monomere benötigt wird. Durch die anionische Polymerisation können als Comonomere nicht Acrylsäure oder andere hydroxygruppenfunktionalisierte Acrylate, wie z.B. Hydroxyethylacrylat, eingesetzt werden.

In der US 5,166,274 A werden zur Kompensierung dieses Mangels Blockcopolymere aus tert.-Butylmethacrylat zur Freisetzung der Carbonsäurefunktion hydrolisiert. Diese Methode läßt sich aber im großtechnischen Maßstab nicht auf Haftklebemassen anwenden, weil der Hydrolyse-Schritt sehr Zeit- und Kostenaufwendig ist.

In der US 6,069,205 A1 werden Di- und Triblock-Copolymere über eine Atom-Transfer-Polymerisation hergestellt und für Klebemassen genutzt. Auch diese Methode ist zur Herstellung von Haftklebemassen nicht geeignet, da Schwermetallverbindungen in relativ hohen katalytischen Mengen eingesetzt werden, die aufwendig über Extraktionsprozesse entfernt werden müßten.

In der EP 1 008 640 A1 werden Styrol-Blockcoplymere beschrieben, die einen Acrylatmittelblock aufweisen, der sich aber aus den gängigen C₂- bis C₁₄-Alkylacrylaten zusammensetzt. Durch die Beschränkung der Comonomere und damit verbunden die der einsetzbaren Harze lassen sich mit diesen Polymeren nur geringe Klebkräfte auf unpolaren Substraten erzielen. Zudem werden auch zur Herstellung dieser Polymere Metallsalze eingesetzt (in Analogie zur US 6,069,205 A), die für Haftklebebandanwendungen aufwendig entfernt werden müssen.

Die WO 00/39233 A zeigt heißschmelzprozessierbare Haftklebemassen auf Basis von Blockcopolymeren. Die Polymerblöcke basieren auf Acrylatmonomeren. Acrylierte Makromonomere mit mehr als 30 Kohlenstoffatomen im Alkoholrest sind nicht erwähnt.

Aufgabe der Erfindung ist es, verbesserte Haftklebemassen auf Polyacrylatbasis zur Verfügung zu stellen, die die Nachteile des Standes der Technik nicht oder nur in verminderter Weise aufzeigen, die also auch im unvernetzten Zustand eine gute Kohäsion aufweisen und sehr hohe Klebkräfte auf unpolaren Oberflächen besitzen. Weiterhin ist ein geringes Alterungsverhalten sowie die Eignung insbesondere für die Verarbeitung im Heißschmelzverfahren und für die Verwendung als Heißschmelzkleber gewünscht.

Gelöst wird die Aufgabe durch die erfindungsgemäßen Haftklebemassen, wie sie im Hauptanspruch dargestellt sind. Die Unteransprüche betreffen verbesserte

Ausführungsformen dieser Haftklebmassen, ein Verfahren zu deren Herstellung sowie deren Verwendung.

Dementsprechend betrifft die Erfindung eine Haftklebemasse auf Basis von Blockcopolymeren, wobei die Blockcopolymere mindestens eine Einheit aus drei aufeinanderfolgenden Polymerblöcken aufweisen, bei denen die drei aufeinanderfolgenden Polymerblöcke in abwechselnder Folge aus der Gruppe der Polymerblöcke P(A) und P(B) gewählt werden, und wobei
- P(A) einen Homo- oder Copolymerblock repräsentiert, erhältlich aus einer Komponente A, welche aus zumindest zwei Monomeren A1, A2 besteht, wobei der Polymerblock P(A) eine Erweichungstemperatur von - 80 °C bis 0° C aufweist,
- zumindest eines (A1) der Monomere der Komponente A ein Acrylsäure- oder Methacrylsäurederivat der allgemeinen Formel

   CH₂=C(R^{I})(COOR^{II}) (I)

   darstellt, wobei R^{I} = H oder CH₃ und R" ein insbesondere verzweigter oder unverzweigter, cyclischer, gesättigter oder ungesättigter, substituierter oder unsubstituierter Alkylrest mit 1 bis 20, besonders bevorzugt mit 4 bis 14 Kohlenstoffatomen ist,
- zumindest ein weiteres (A2) der Monomere der Komponente A ein acryliertes Makromonomer entsprechend der allgemeinen Formel

   CH₂=C(R^{III})(COOR^{IV}) (II)

   darstellt, wobei R^{III} = H oder CH₃ und R^{IV} ein aliphatischer linearer oder verzweigter cyclischer, unsubstituierter oder substituierter Alkylrest mit mehr als 30 Kohlenstoffatomen ist, und wobei das mittlere Molekulargewicht M_{N} (Zahlenmittel) des zumindest einen Makromonomers zwischen 492 g/mol (30 C-Atome) und 30.000 g/mol liegt.
- P(B) einen Homo- oder Copolymerblock repräsentiert, erhältlich aus einer Komponente B, welche aus zumindest einem Monomer B1 besteht, wobei der Polymerblock P(B) eine Erweichungstemperatur von 20 °C bis 175 °C aufweist,
- die Polymerblöcke P(A) nicht homogen mischbar mit den Polymerblöcken P(B) sind.

Die Blockcopolymere der erfinderischen Haftklebemasse enthalten also mindestens die Einheit P(B)-P(A)-P(B) aus einem mittleren Polymerblock P(A) sowie aus zwei den mittleren Polymerblock P(A) umschließende Polymerblöcke P(B) und/oder die hierzu inverse Struktureinheit, also mindestens die Einheit P(A)-P(B)-P(A) aus einem mittleren Polymerblock P(B) sowie aus zwei den mittleren Polymerblock P(B) umschließende Polymerblöcke P(A) mit der vorstehend beschriebenen Maßgabe für die Polymerblöcke P(A) und P(B).

Die Blockcocpolymere für die erfindungsgemäße Haftklebemasse lassen sich in unterschiedlichsten Strukturen herstellen und vorteilhaft einsetzen. So sei explizit verwiesen auf gerade oder verzweigte Ketten aus den Polymerblöcken P(A) und P(B), beispielsweise entsprechend einer allgemeinen Struktur [P(A)-P(B)]ₙ, auf Sternpolymere aus P(A) und P(B), beispielsweise entsprechend der allgemeinen Strukturen [[P(A)-P(B)]ₙ]ₘX oder [[P(B)-P(A)]ₙ]ₘX oder [[P(A)-P(B)]ₙ]ₘX[P(A)-P(B)]ₚ]_{q}, oder der allgemeinen Strukturen [[P(A)-P(B)]ₙ]ₘXLₚ oder [[P(B)-P(A)]ₙ]ₘXLₚ, wobei L hier unterschiedliche Reste darstellen können. Die Aufzählung dieser Strukturen soll nur beispielhaft sein und keine Beschränkung darstellen. Dabei seien auch alle "unsymmetrischen" Strukturen eingeschlossen, bei denen alle der auftretenden Polymerblöcke P(A) und P(B) für sich die obengenannten Definitionen erfüllen, die Indizes n, m p und q aber lediglich das multiple Auftreten der einzelnen Einheiten, nicht aber deren chemische oder strukturelle Identität bedingen. L können bevorzugt Reste sein, welche beispielsweise Poly(meth)acrylate darstellen, welche aber in sich keine Blockstruktur aufweisen. Hierzu zählen insbesondere auch Homopolymere aus den Komponenten A oder B.

In einer vorteilhaften Weiterentwicklung der Erfindung wird als Monomer A3 für die Komponente A zusätzlich zumindest eine Vinylverbindung mit funktionellen Gruppen eingesetzt.

Eine besonders günstige Ausführungsform der Erfindung zeichnet sich die folgende Zusammensetzung der Komponente A aus:
- 35 bis 97 Gew.-% Acrylsäure- und/oder Methacrylsäurederivate entsprechend Monomer A1,
- 3 bis 40 Gew.-% Makromonomere entsprechend Monomer A2,
- 0 bis 25 Gew.-% Vinylverbindungen entsprechend Monomer A3.

In sehr günstiger Vorgehensweise werden als Monomere für die Komponente A solche Acrylmonomere und/oder Vinylmonomere gewählt, welche die Glasübergangstemperatur des Blocks P(A) - auch in Kombination mit weiteren Monomeren für die Komponente A - auf unterhalb 0 °C heruntersetzen.

Als Monomere A1 werden in bevorzugter Weise eine oder mehrere Verbindungen eingesetzt, welche sich durch die allgemeine Formel (I) beschreiben lassen, wobei R^{I} = H oder CH₃ und der Rest R^{II} gewählt wird aus der Gruppe der aliphatischen linearen, verzweigten oder cyclischen, unsubstituierten oder substituierten, gesättigten oder ungesättigten Alkylreste mit 4 bis 14, bevorzugt 4 bis 9 Kohlenstoffatomen.

Bevorzugte Beispiele für Monomere A1 sind n-Butylacrylat, n-Pentylacrylat, n-Hexylacrylate, n-Heptylacrylat, n-Octylacrylat, n-Nonylacrylat und deren verzweigten Isomere, wie beispielsweise 2-Ethylhexylacrylat. Weiterhin gehören die zu den oben angeführten Acrylaten entsprechenden Methacrylate zu den bevorzugten Beispielen für die Monomere A1. Verbindungen, welche sich hervorragend als Monomere A1 einsetzen lassen, sind zudem Isobutylacrylat, Isooctylacrylat und Isobornylacrylat.

Im Sinne des Monomers A2 werden bevorzugt hydrierte Ethylen/Propylen-Makromonomere und/oder hydrierte Ethylen/Butylen-Makromonomere eingesetzt, welche eine Erweichungstemperatur von nicht über 0 °C besitzen und als Endgruppe eine Acrylat- oder Methacrylatfunktion tragen. Als ein sehr bevorzugtes Beispiel wird Kraton L-1253™ (Shell AG) eingesetzt. Kraton Liquid L-1253™ (Shell AG) ist ein Makromonomer mit einem Molekulargewicht von 4000 g/mol, Methacrylat-funktionalisiert und besitzt als aliphatische Seitenkette eine gesättigte Poly(ethylen/butylen)-Einheit.
In einer im erfinderischen Sinne sehr günstigen Vorgehensweise werden als Makromonomere aliphatische Acrylsäureester, wie z.B. Acrylsäuretriacontanylester, eingesetzt sowie höhere Homologe.

Als Vinylverbindung im Sinne der Monomere A3 werden hier alle Monomere bezeichnet, welche eine zur Polymerisation befähigte vinyloge Doppelbindung aufweisen, insbesondere solche, bei denen diese Doppelbindung durch funktionelle Gruppen für die Polymerisation aktiviert wird. In diesem Sinne lassen sich auch (Meth-)Acrylate in die Gruppe der Vinylmonomere einordnen.

In einer sehr vorteilhaften Ausführungsform der Erfindung wird zumindest eines der Monomere der Komponente A, insbesondere zumindest eines der Monomere A3, derart gewählt, daß es eine oder mehrere funktionelle Gruppen aufweist, welche zu einer Vernetzungsreaktion für der Blockcopolymere genutzt werden können, besonders zu einer thermischen oder strahlenchemischen Vernetzung, ganz besonders zu einer Vernetzung, welche durch UV-Strahlen oder durch Bestrahlung mit Elektronenstrahlen hervorgerufen und/oder unterstützt wird.

Dies können in besonders günstiger Weise (Meth-)Acrylderivate mit ungesättigten Alkylresten im Rest R^{VI} der allgemeinen Formel

CH₂=C(R^{V})(CC)OR^{VI}) (III)

sein, wobei R^{V} = H oder CH₃ ist. Bevorzugt für R^{VI} sind dabei Alkylreste mit 3 bis 14 Kohlenstoffatome, welche mindestens eine C-C-Doppelbindung aufweisen. Für mit Doppelbindungen modifizierte Acrylate eignen sich besonders vorteilhaft Allylacrylat und acrylierte Zimtsäureester.
In einer vorteilhaften Variante der erfindungsgemäßen Haftklebemasse lassen sich auch Acrylmonomere entsprechend der allgemeinen Formel (III) einsetzen, bei denen die Gruppe -OR^{VI} eine andere funktionelle Gruppe zur Vernetzung der Haftklebemasse darstellt oder mehere weitere und/oder andere funktionelle Gruppen zur Vernetzung der Haftklebemasse beinhaltet.
Weiterhin lassen sich sehr vorteilhaft als Monomere A3 auch Vinylverbindungen mit weiteren, während der (radikalischen) Polymerisation nicht reagierenden Doppelbindungen einsetzen. Besonders bevorzugte Beispiele sind Isopren und Butadien.

Bevorzugte Beispiele für Monomere A3 sind weiterhin Vinylacetat, Acrylamide, mit zumindest einer Doppelbindung funktionalisierte Fotoinitiatoren, Tetrahydrofurylacrylat, hydroxyfunktionalisierte (Meth-)Acrylate, carbonsäurefunktionalisierte (Meth-)Acrylate, amin- oder amidfunktionalisierte (Meth-)Acrylate, weiterhin Vinylester, Vinylether, Vinylhalogenide, Vinylidenhalogenide, Vinylverbindungen mit aromatischen Cyclen und Heterocyclen in α-Stellung, insbesondere Vinylacetat, Vinylformamid, Vinylpyridin, Ethylvinylether, Vinylchlorid, Vinylidenchlorid, Acrylonitril.
Eingesetzt werden im Sinne der Monomere A3 können weiterhin vorteilhaft Hydroxyethylacrylat, Hydroxypropylacrylat, Hydroxyethylmethacrylat, Hydroxypropylethacrylat, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glyceridylmethacrylat.

In einer weiteren sehr günstigen Ausführungsform der erfinderischen Haftklebemasse sind solche zur Vernetzung befähigten funktionellen Gruppen eingeführt, welche durch den Einfluß thermischer Energie zu einer Vernetzungsreaktion befähigt sind. Sehr bevorzugt sind hier Hydroxy-, Carboxy-, Epoxy-, Säureamid-, Isocyanato- oder Aminogruppen.

Das zumindest eine Monomer B1 wird bevorzugt derart gewählt, daß die Polymerblöcke P(B) in der Lage sind, eine Zwei-Phasen-Domänenstruktur mit den Copolymerblöcken P(A) auszubilden.
Vorteilhafte Beispiele, welche als Monomere für die Komponente B eingesetzt werden, sind Vinylaromaten, Methylmethacrylate, Cyclohexylmethacrylate, Isobornylmethacrylate. besonders bevorzugte Beispiele sind Methylmethacrylat und Styrol.

Es hat sich für die Erfindung als besonders vorteilhaft herausgestellt, wenn die Blockcopolymere ein mittleres Molekulargewicht M_{N} (Zahlenmittel) zwischen 5.000 und 600.000 g/mol, insbesondere zwischen 80.000 und 450.000 g/mol aufweisen.

Der Anteil der Polymerblöcke P(B) liegt bevorzugt zwischen 10 und 60 Gew.-%, insbesondere zwischen 15 und 40 Gew.-% der gesamten Blockcopolymere.

Die Erfindung betrifft weiterhin ein Verfahren zur Herstellung der erfinderischen Haftklebemasse, bei welchem das Blockcopolymer über eine Trithiocarbonat-kontrollierte radikalische Polymerisation hergestellt wird.

Zur Herstellung der für die erfindungsgemäßen Haftklebemassen eingesetzten Blockcopolymere können prinzipiell aber auch alle kontrolliert radikalisch verlaufenden Polymerisationen eingesetzt werden, wie z.B. die ATRP (Atom-Transfer Radical Polymerization), oder die Nitroxid/TEMPO kontrollierte Polymerisation oder mehr bevorzugt der RAFT-Prozess (rapid addition-fragmentation chain transfer).

Die Polymerisation kann in Gegenwart eines organischen Lösungsmittels oder in Gegenwart von Wasser oder in Gemischen aus organischen Lösungsmitteln und/oder Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzenbenzin, aromatische Lösemittel, wie Toluol oder Xylol, oder Gemische dieser Lösungsmittel verwendet. Für die Polymerisation in wäßrigen Medien bzw. Gemischen aus organischen und wäßrigen Lösungsmitteln werden zur Polymerisation bevorzugt Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische eignen sich hervorragend. Zur Radikalstabilisierung werden Nitroxide des Typs (IVa) oder (IVb) eingesetzt: 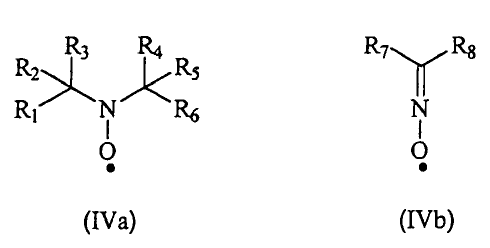 wobei R₁, R₂, R₃, R₄, R₅, R₆, R₇, R₈ unabhängig voneinander folgende Verbindungen oder Atome bedeuten:
i) Halogenide, wie z.B. Chlor, Brom oder lod
ii) lineare, verzweigte, cyclische und heterocyclische Kohlenwasserstoffe mit 1 bis 20 Kohlenstoffatomen, welche gesättigt, ungesättigt und aromatisch sein können,
iii) Ester -COOR₉, Alkoxide -OR₁₀ und/oder Phosphonate -PO(OR₁₁)₂,
   wobei R₉, R₁₀ oder R₁₁ für Reste aus der Gruppe ii) stehen.

Die Verbindungen (IVa) oder (IVb) können auch an Polymerketten jeglicher Art gebunden sein und somit zum Aufbau der Blockcopolymere als Makroradikale oder Makroregler genutzt werden.

Mehr bevorzugt werden kontrollierte Regler für die Polymerisation Verbindungen des Typs:
- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- T-Butyl-t-amyl Nitroxid

Als weitere kontrollierte Polymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oder Au-Komplexe [EP 0 824 111 A1; EP 0 826 698 A1; EP 0 824 110 A1; EP 0 841 346 A1; EP 0 850 957 A1] eingesetzt werden. Die unterschiedlichen Möglichkeiten der ATRP sind ferner in den Schriften US 5,945,491 A, US 5,854,364 A und US 5,789,487 A beschrieben.

Weiterhin kann das P(B)-P(A)-P(B)-Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.
Das lebende Polymer wird im allgemeinen durch die Struktur P(B)-M repräsentiert, wobei M ein Metall der Gruppe 1 des Periodensystems ist, wie z.B. Lithium, Natrium oder Kalium. Das Molekulargewicht des Polymers wird durch das Verhältnis von Initiator zu Monomer vorgegeben. Zum Aufbau der Blockstruktur werden dann die Monomere für Block P(A) hinzugegeben, um dann anschließend wiederum durch Zugabe des (der) Monomer(e) für Block P(B) den Polymerblock P(B)-P(A)-P(B) herzustellen. Alternativ kann P(B)-P(A)-M durch eine geeignete difunktionelle Verbindung gekuppelt werden. Auf diesem Weg sind auch Sternblockcopolymere [P(B)-P(A)]ₙX zugänglich. Als geeignete Polymerisationsinitiatoren eignen sich z.B. n-Propyllithium, n-Butyllithium, 2-Naphthyllithium, Cyclohexyllithium oder Octyllithium, ohne sich durch diese Aufzählung unnötig beschränken zu wollen.

Weiterhin lassen sich auch difunktionelle Inititiatoren einsetzen, wie z.B. 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind beispielsweise Lithiumhalogenide, Alkalimetallalkoxide oder Alkylaluminium-Verbindungen.

Als sehr bevorzugte Variante wird der RAFT-Prozeß (reversible addition-fragmentation chain transfer) durchgeführt. Der Prozeß ist in den Schriften WO 98/01478 A1 und WO 99/31144 A1 ausführlich beschrieben. Zur Herstellung von Blockcopolymeren eignen sich besonders vorteilhaft Trithiocarbonate [Macromolecules 2000, 33, 243-245), wobei in einem ersten Schritt Monomere für die Endblöcke B polymerisiert werden und in einem zweiten Schritt der Mittelblock A polymerisiert wird. Nach der Polymerisation der Endblöcke kann die Reaktion abgebrochen und reinitiiert werden. Ferner kann auch ohne Reaktionsunterbrechung sequentiell polymerisiert werden. In einer sehr vorteilhaften Variante wird das Trithiocarbonat (V) zur Polymerisation eingesetzt:

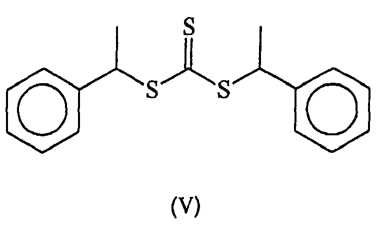

Im Verfahren zur Herstellung der erfindungsgemäßen Haftklebemassen wird das Lösemittel bevorzugt in einem Aufkonzentrationsextruder unter vermindertem Druck entfernt. Hierbei werden beispielsweise Ein- oder Doppelschneckenextruder eingesetzt, die bevorzugt das Lösemittel abdestillieren. Doppelschneckenextruder können vorteilhaft gleich- oder gegenläufig betrieben werden.

Zur vorteilhaften Weiterentwicklung werden der erfindungsgemäßen Haftklebemasse bis zu 50 Gew.-%, insbesondere 20 bis 40 Gew.-%, Harze zugesetzt. Als Harze werden beispielsweise Terpenharze, Terpenphenolharze, C₅- und/oder C₉-Kohlenwasserstoffharze, Pinen-, Inden- und/oder Kolophoniumharze allein oder auch in Kombination miteinander eingesetzt. Prinzipiell lassen sich alle mit dem entsprechenden Polyacrylatmittelblock P(A) verträglichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.
Weiterhin können in bevorzugter Vorgehensweise Additive, insbesondere Vernetzer, Alterungsschutzmittel, Lichtschutzmittel, Ozonschutzmittel, Fettsäuren, Weichmacher, Keimbildner, Blähmittel, Beschleuniger und/oder Füllmittel (beispielsweise Ruß, TiO₂, Voll- oder Hohlkugeln aus Glas oder anderen Materialien) zugesetzt werden.
Als mit der Haftklebemasse verträgliche Vernetzer zur chemischen Vernetzung eignen sich bevorzugt Metallchelate, multifunktionelle Isocyanate, multifunktionelle Amine oder multifunktionelle Alkohole. Weiterhin lassen sich unter anderem auch multifunktionelle Acrylate vorteilhaft als Vernetzer für eine durch actinische Bestrahlung hervorgerufenen oder geförderte Vernetzung verwenden.
Als die Vernetzung initiierende und/oder fördernde Substanzen im Falle einer UV-Vernetzung der Haftklebemasse werden den Blockcopolymeren UV-Photoinitiatoren zugesetzt. Nützliche Photoinitiatoren, welche sehr gut zu verwenden sind, sind Benzoinether, wie z.B. Benzoinmethylether und Benzoinisopropylether, substituierte Acetophenone, wie z.B. 2,2-Diethoxy-2-phenyl-1-phenylethanon, 2,2-Dimethoxy-2-phenyl-1-phenylethanon, Dimethoxyhydroxyacetophenon, substituierte alpha-Ketole, wie z.B. 2-Methoxy-2-hydroxy-propiophenon, aromatische Sulfonylchloride, wie z.B. 2-Naphthyl-sulfonylchlorid, sowie photoaktive Oxime, wie z.B. 1-Phenyl-1,2-propandion-2-(O-ethoxycarbony-)oxim.

Eine Weiterentwicklung, die das erfinderische Verfahren besonders günstig für die Herstellung von beispielsweise Klebebändern macht, zeichnet sich dadurch aus, daß die (gegebenenfalls abgemischte) Haftklebemasse aus der Schmelze heraus weiterverarbeitet wird, wobei sie insbesondere auf einen Träger aufgetragen wird. Als Trägermaterial haben sich hierbei die dem Fachmann geläufigen und üblichen Materialien bewährt, wie beispielsweise Folien (Polyester, PET, PE, PP, BOPP, PVC), Vliese, Schäume, Gewebe und Gewebefolien sowie Trennpapier (Glassine, HDPE, LDPE).

Im Anschluß an die Herstellung und die Weiterverarbeitung erfolgt vorteilhaft eine Vernetzung der Haftklebemasse. Die Vernetzung erfolgt bevorzugt durch kurzzeitige UV-Bestrahlung in einem Wellenlängenbereich von etwa 200 bis 400 nm mit handelsüblichen Quecksilber-Hochdruck- oder-Mitteldruck-Lampen mit einer Leistung von z.B. 80 bis 240 W/cm, durch thermische Energie in einem Temperaturbereich zwischen etwa 70 und 140 °C oder durch ionisierende Strahlung, wie beispielsweise Elektronenstrahlhärtung. Für die UV-Vernetzung kann es angebracht sein, die Strahlerleistung der Bahngeschwindigkeit anzupassen oder die Bahn bei langsamer Fahrt teilweise abzuschatten, um ihre thermische Belastung zu verringern. Die Bestrahlungszeit richtet sich nach Bauart und Leistung der jeweiligen Strahler.

Dementsprechend betrifft die Erfindung schließlich die Verwendung einer wie im vorstehenden beschriebenen Haftklebemasse für ein ein- oder doppelseitig mit der Haftklebemasse ausgerüstetes Klebeband, insbesondere für ein Klebeband für Verklebungen auf unpolaren Oberflächen, wobei das Klebeband bevorzugt derart hergestellt ist, daß die Haftklebemasse aus der Schmelze heraus auf einen Träger aufgetragen wird.

### Beispiele

Die Erfindung soll im folgenden durch einige Beispiele näher erläutert werden, ohne sich hierdurch unnötig beschränken zu wollen.

| Eingesetzte kommerziell erhältliche Chemikalien | | |
|---|---|---|
| **Substanz** | **Hersteller** | **Chemische Zusammensetzung** |
| Vazo 67 | DuPont | 2,2'-Azo-bis(2-ethylpropionsäurenitril) |
| Regalite R91 | Hercules | vollhydriertes Kohlenwasserstoffharz, Mₙ = 500 g/mol, Polydispersität 1,4 Erweichungsbereich 85 - 91 °C |

### Testmethoden

### Scherfestigkeit (Test TA1, TA2)

Ein 13 mm breiter Streifen des Klebebandes wurde auf eine glatte und gereinigte Stahloberfläche aufgebracht. Die Auftragsfläche betrug 20 mm × 13 mm (Länge × Breite). Anschließend wurde wie folgt vorgegangen:
Test TA1: Bei Raumtemperatur wurde ein 1 kg-Gewicht an dem Klebeband befestigt und die Zeit bis zum Abfallen des Gewichtes gemessen.
Test TA2: Bei 70 °C wurde ein 1 kg-Gewicht an dem Klebeband befestigt und die Zeit bis zum Abfallen des Gewichtes gemessen.

Die gemessenen Scherstandzeiten sind jeweils in Minuten angegeben und entsprechen dem Mittelwert aus drei Messungen.

### 180° Klebkrafttest (Test TB1, TB2)

Ein 20 mm breiter Streifen einer auf einer Polyester als Schicht aufgetragenen Acrylathaftklebemasse wurde auf PE-Platten (TB1) oder PP-Platten (TB2) aufgebracht. Der Haftklebestreifen wurde zweimal mit einem 2 kg Gewicht auf das Substrat aufgedrückt. Das Klebeband wurde anschließend sofort mit 300 mm/min und im 180°-Winkel vom Substrat abgezogen. Alle Messungen wurden bei Raumtemperatur unter klimatisierten Bedingungen durchgeführt.
Die Messergebnisse sind in N/cm angegeben und sind gemittelt aus drei Messungen.

### Herstellung des Trithiocarbonats:

Als Regler wurde folgendes Trithiocarbonat (V) gemäß Macromolecules 2000, 33, 243-245 und Synth. Commun. 1988, 18, 1531-1536 hergestellt.

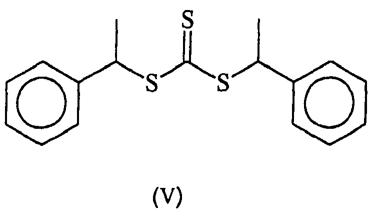

### Durchführung der Polymerisationen

### Trithiocarbonat-funktionalisiertes Polystyrol (VI):

In einem 500 ml Schlenkgefäß wurden 400 ml Styrol und 3,47 g des Trithiocarbonates (V) (0,01172 mol) eingefüllt, das Gefäß dreimal entgast und dann unter Argon die Polymerisation durchgeführt. Zur Initiierung wurde auf 120 °C hochgeheizt und unter Rühren 30 h polymerisiert. Zur Isolierung wurde auf RT abgekühlt, das Polymer in 1000 ml Dichlormethan gelöst und dann in 7,5 L Methanol unter starkem Rühren gefällt. Der Niederschlag wurde über eine Fritte abfiltriert und dann via GPC analysiert. (Mₙ = 23.500, M_{w}/Mₙ = 1,32).

### Trithiocarbonat-funktionalisiertes Polystyrol (VII):

In einem 750 ml Schlenkgefäß wurden 500 ml Styrol und 3,47 g des Trithiocarbonates (V) (0,01172 mol) eingefüllt, das Gefäß dreimal entgast und dann unter Argon die Polymerisation durchgeführt. Zur Initiierung wurde auf 120 °C hochgeheizt und unter Rühren 48 h polymerisiert. Zur Isolierung wurde auf RT abgekühlt, das Polymer in 1000 ml Dichlormethan gelöst und dann in 7,5 L Methanol unter starkem Rühren gefällt. Der Niederschlag wurde über eine Fritte abfiltriert und dann via GPC analysiert. (Mₙ = 29.100 g/mol, M_{w}/Mₙ = 1,26).

### Beispiel 1:

Ein für radikalische Polymerisationen konventioneller Reaktor wurde mit 32 g Trithiocarbonat-funktionalisiertes Polystyrol (VI), 400 g 2-Ethylhexylacrylat, 45 g Kraton Liquid L-1253™ (Fa. Shell), 4 g Acrylsäure und 0.12 g Vazo 67™ (Fa. DuPont) befüllt. Nach 20 Minuten Durchleiten von Argon und zweimaligen Entgasen wurde der Reaktor unter Rühren auf 70 °C hochgeheizt. Nach 4 h wurden mit 200 g Aceton/Siedegrenzenbenzin (1:2) verdünnt, nach 5 h mit 0.12 g Vazo 67™ nachinitiiert und nach 24 h die Polymerisation abgebrochen.
Zur Isolierung wurde auf RT abgekühlt, das Blockcopolymer auf 40 % durch Aceton/Siedegrenzenbenzin (1:2) verdünnt und dann mit 10 Gewichtsanteilen Regalite R91™ (Fa. Hercules) bezogen auf den Polymeranteil abgemischt. Das Acrylatblockcopolymer wird in einem Vakuum/Trockenschrank vom Lösungsmittelgemisch befreit und anschließend aus der Schmelze über eine Breitschlitzdüse auf eine mit Saran geprimerten 23 um dicken PET-Träger mit 50 g/m² Masseauftrag beschichtet. Anschließend wurde nach den Testmethoden TA1, TA2 und TB1, TB2 ausgetestet.

### Beispiel 2:

Es wurde analog Beispiel 1 vorgegangen. Das Acrylatblockcopolymer wurde mit 20 Gewichtsanteilen Regalite R91™ (Fa. Hercules) bezogen auf den Polymeranteil abgemischt. Nach der Beschichtung aus der Schmelze wurde nach den Testmethoden TA1, TA2 und TB1, TB2 ausgetestet.

### Beispiel 3:

Es wurde analog Beispiel 1 vorgegangen. Das Acrylatblockcopolymer wurde mit 30 Gewichtsanteilen Regalite R91™ (Fa. Hercules) bezogen auf den Polymeranteil abgemischt. Nach der Beschichtung aus der Schmelze wurde nach den Testmethoden TA1, TA2 und TB1, TB2 ausgetestet.

### Beispiel 4:

Ein für radikalische Polymerisationen konventioneller Reaktor wurde mit 32 g Trithiocarbonat-funktionalisiertes Polystyrol (VII), 340 g n-Butylacrylat, 4 g Acrylsäure, 44 g Kraton Liquid L-1253™ (Fa. Shell) und 0.12 g Azoisobutyronitril (AIBN) befüllt. Nach 20 Minuten Durchleiten von Argon und zweimaligen Entgasen wurde der Reaktor unter Rühren auf 60 °C hochgeheizt, nach 2 h mit 0.12g Vazo 67™ (Fa. DuPont) nachinitiiert, nach 6 h mit 150 g Aceton/Siedegrenzenbenzin (1:2) verdünnt und die Polymerisation nach 24 h abgebrochen.
Zur Isolierung wurde auf RT abgekühlt, das Acrylatblockcopolymer auf 40 % durch Aceton/Siedegrenzenbenzin (1:2) verdünnt und dann mit 10 Gewichtsanteilen Regalite R91™ (Fa. Hercules) bezogen auf den Polymeranteil abgemischt. Das Acrylatblockcopolymer wird in einem Vakuum/Trockenschrank vom Lösungsmittelgemisch befreit und anschließend aus der Schmelze über eine Breitschlitzdüse auf eine mit Saran geprimerten 23 µm dicken PET-Träger mit 50 g/m² Masseauftrag beschichtet. Anschließend wurde nach den Testmethoden TA1, TA2 und TB1, TB2 ausgetestet.

### Beispiel 5:

Es wurde analog Beispiel 4 vorgegangen. Das Acrylatblockcopolymer wurde mit 30 Gewichtsanteilen Regalite R91™ (Fa. Hercules) bezogen auf den Polymeranteil abgemischt. Nach der Beschichtung aus der Schmelze wurde nach den Testmethoden TA1, TA2 und TB1, TB2 ausgetestet.

### Beispiel 6:

In einem konventionellen radikalischen Polymerisationsreaktor wurden 1.6 g Trithiocarbonat (V), 400 g 2-Ethylhexylacrylat, 40 g Kraton Liquid L-1253™ (Fa. Shell), 100 g Aceton und 200 g Siedegrenzenbenzin 60/95 eingefüllt, das Gefäß dreimal entgast und dann unter Argon die Polymerisation durchgeführt. Zur Initiierung wurde auf 80 °C hochgeheizt und 0.2 g Vazo 67™ (Fa. DuPont) hinzugegeben. Nach 4 h wurde wiederum 0.2 g Vazo 67™ (Fa. DuPont) hinzugegeben und nach 6 h mit 100 g Siedegrenzenbenzin 60/95 verdünnt. Die Polymerisation wurde nach 48 h abgebrochen, auf RT abgekühlt und das Polymer vom Lösemittel im Vakuumtrockenschrank befreit. Anschießend wurde das Polymer in 200 g Xylol und 80 g Styrol gelöst, wiederum in einen Polymerisationsreaktor überführt, auf 120 °C hochgeheizt und 0.2 g Vazo 67™ (Fa. DuPont) hinzugegeben. Nach 6 h wurden wiederum 0.2 g Vazo 67™ (Fa. DuPont) hinzugegeben. Die Polymerisation wurde nach 48 h durch Abkühlen auf RT abgebrochen. Das Blockcopolymer wurde anschließend mit 10 Gewichtsanteilen Regalite R91™ (Fa. Hercules) bezogen auf den Polymeranteil abgemischt, in einem Vakuum/Trockenschrank vom Lösungsmittel befreit und anschließend aus der Schmelze über eine Breitschlitzdüse auf eine mit Saran geprimerten 23 µm dicken PET-Träger mit 50 g/m² Masseauftrag beschichtet. Anschließend wurde nach den Testmethoden TA1, TA2 und TB1, TB2 ausgetestet.

### Resultate

In der folgenden Tabelle sind die klebtechnischen Eigenschaften dieser Massen aufgelistet.

| Beispiel | SSZ RT /TA1 | SSZ 70 °C /TA2 | KK auf PE / TB1 | KK auf PP /TB2 |
|---|---|---|---|---|
| 1 | +10000 | 164 | 4.5 | 4.8 |
| 2 | +10000 | 102 | 5.4 | 6.0 |
| 3 | +10000 | 85 | 7.6 | 7.9 |
| 4 | +10000 | 178 | 5.1 | 5.6 |
| 5 | +10000 | 79 | 7.0 | 7.5 |
| 6 | +2570 | 47 | 4.0 | 4.6 |

| | | | | |
|---|---|---|---|---|
| SSZ: Scherstandzeiten in min | | | | |
| KK: Klebkraft in N/cm | | | | |

Die Beispiele 1 bis 3 belegen, daß die erfindungsgemäßen Polystyrolendblockfunktionalisierten Polyacrylate mit unpolaren Seitenketten in Kombination mit dem Harz Regalite R91™ (Fa. Hercules) eine sehr gute Klebkraft auf unpolaren Oberflächen aufweisen. Je höher der Harzanteil, desto höher ist auch die Klebkraft auf PE und PP. Mit 30 % Harz werden Klebkräfte größer 7 N/cm realisiert.
Ferner wird durch die Blockdomänenbildung des Polystyrols keine Vernetzung mehr benötigt. Die Muster sind bei Raumtemperatur sehr scherfest und weisen somit eine sehr gute Kohäsion auf. Ferner sind die Haftklebemassen sehr klar und transparent, obwohl Regalite R91™ ein sehr unpolares Harz ist und üblicherweise nicht verträglich mit Polyacrylaten ist. Beispiel 6 stellt ein invers aufgebautes Blockcopolymer der Struktur P(A)-P(B)-P(A). Auch diese Blockcopolymere sind über das Verfahren zugänglich und lassen sich ohne zusätzliche Vernetzung als klebstarke Haftklebemassen einsetzen.

## Patentansprüche

1. Haftklebemasse auf Basis von Blockcopolymeren, wobei die Blockcopolymere mindestens eine Einheit aus drei aufeinanderfolgenden Polymerblöcken aufweisen, bei denen die drei aufeinanderfolgenden Polymerblöcke in abwechselnder Folge aus der Gruppe der Polymerblöcke P(A) und P(B) gewählt werden, **dadurch gekennzeichnet, daß**
- P(A) einen Homo- oder Copolymerblock repräsentiert, erhältlich aus einer Komponente A, welche aus zumindest zwei Monomeren A1, A2 besteht, wobei der Polymerblock P(A) eine Erweichungstemperatur von - 80 °C bis 0 °C aufweist,
- zumindest eines (A1) der Monomere der Komponente A ein Acrylsäure- oder Methacrylsäurederivat der allgemeinen Formel
CH₂=C(R^{I})(COOR^{II}) (I)
darstellt, wobei R^{I} = H oder CH₃ und R" ein aliphatischer linearer, verzweigter oder cyclischer, unsubstituierter oder substituierter, gesättigter oder ungesättigter Alkylrest mit 1 bis 20 Kohlenstoffatomen ist,
- zumindest ein weiteres (A2) der Monomere der Komponente A ein acryliertes Makromonomer entsprechend der allgemeinen Formel
CH₂=C(R^{III})(COOR^{IV}) (II)
darstellt, wobei R^{III} = H oder CH₃ und R^{IV} ein aliphatischer linearer, verzweigter oder cyclischer, unsubstituierter oder substituierter, gesättigter oder ungesättigter Alkylrest mit mehr als 30 Kohlenstoffatomen ist, und wobei das mittlere Molekulargewicht M_{N} des zumindest einen Makromonomers zwischen 492 g/mol und 30.000 g/mol liegt,
- P(B) einen Homo- oder Copolymerblock repräsentiert, erhältlich aus einer Komponente B, welche aus zumindest einem Monomer B1 besteht, wobei der Polymerblock P(B) eine Erweichungstemperatur von 20 °C bis 175 °C aufweist,
- die Polymerblöcke P(A) nicht homogen mischbar mit den Polymerblöcken P(B) sind.

2. Haftklebemasse nach Anspruch 1, **dadurch gekennzeichnet, daß**
als Monomer A3 für die Komponente A zusätzlich zumindest eine Vinylverbindung mit funktionellen Gruppen eingesetzt wird.

3. Haftklebemasse nach zumindest einem der vorangehenden Ansprüche, **dadurch gekennzeichnet, daß**
die Komponente A sich wie folgt zusammensetzt:
- 35 bis 97 Gew.-% Acrylsäure- und/oder Methacrylsäurederivate entsprechend Monomer A1,
- 3 bis 40 Gew.-% Makromonomere entsprechend Monomer A2,
- 0 bis 25 Gew.-% Vinylverbindungen entsprechend Monomer A3.

4. Haftklebemasse nach zumindest einem der vorangehenden Ansprüche, **dadurch gekennzeichnet, daß**
im Sinne des Monomers A1 als Rest R^{II} ein (wie gearteter) Alkylrest mit 4 bis 14 Kohlenstoffatomen gewählt wird.

5. Haftklebemasse nach zumindest einem der vorangehenden Ansprüche, **dadurch gekennzeichnet, daß**
im Sinne des Monomers A2 hydrierte Ethylen/Propylen-Makromonomere und/oder hydrierte Ethylen/Butylen-Makromonomere eingesetzt werden, welche eine Erweichungstemperatur von nicht über 0 °C besitzen und als Endgruppe eine Acrylat- oder Methacrylatfunktion tragen.

6. Haftklebemasse nach zumindest einem der vorangehenden Ansprüche, **dadurch gekennzeichnet, daß**
zumindest eines der Monomere der Komponente A derart gewählt wird, daß es eine oder mehrere funktionelle Gruppen aufweist, welche zu einer Vernetzungsreaktion für der Blockcopolymere genutzt werden können, besonders zu einer thermischen oder strahlenchemischen Vernetzung, ganz besonders zu einer Vernetzung, welche durch UV-Strahlen oder durch Bestrahlung mit Elektronenstrahlen hervorgerufen und/oder unterstützt wird.

7. Haftklebemasse nach zumindest einem der vorangehenden Ansprüche, **dadurch gekennzeichnet, daß**
zumindest eines der Monomere der Komponente A aus der Gruppe derjenige Acrylderivate gewählt wird, welche zumindest eine während einer radikalischen Polymerisation nicht reagierende Doppelbindung aufweist.

8. Haftklebemasse nach zumindest einem der vorangehenden Ansprüche, **dadurch gekennzeichnet, daß**
das zumindest eine Monomer B1 derart gewählt wird, daß die Polymerblöcke P(B) in der Lage sind, eine Zwei-Phasen-Domänenstruktur mit den Copolymerblöcken P(A) auszubilden.

9. Haftklebemasse nach zumindest einem der vorangehenden Ansprüche, **dadurch gekennzeichnet, daß**
die Blockcopolymere ein mittleres Molekulargewicht M_{N} (Zahlenmittel) zwischen 5.000 und 600.000 g/mol, insbesondere zwischen 80.000 und 450.000 g/mol aufweisen.

10. Haftklebemasse nach zumindest einem der vorangehenden Ansprüche, **dadurch gekennzeichnet, daß**
der Anteil der Polymerblöcke P(B) zwischen 10 und 60 Gew.-%, insbesondere zwischen 15 und 40 Gew.-%, der gesamten Blockcopolymere liegt.

11. Haftklebemasse nach zumindest einem der vorangehenden Ansprüche, **dadurch gekennzeichnet, daß**
bis zu 50 Gew.%, insbesondere 20 bis 40 Gew.-%, Harze, und/oder daß Additive, insbesondere Vernetzer, Alterungsschutzmittel, Lichtschutzmittel, Ozonschutzmittel, Fettsäuren, Weichmacher, Keimbildner, Blähmittel, Beschleuniger und/oder Füllmittel, zugesetzt sind.

12. Verwendung einer Haftklebemasse nach zumindest einem der vorangehenden Ansprüche für ein ein- oder doppelseitig mit der Haftklebemasse ausgerüstetes Klebeband, insbesondere für ein Klebeband für Verklebungen auf unpolaren Oberflächen, wobei die Haftklebemasse - bevorzugt aus der Schmelze - als ein- oder doppelseitiger Film auf einen Träger aufgetragen ist.

13. Verfahren zur Herstellung einer Haftklebemasse nach zumindest einem der vorangehenden Ansprüche, **gekennzeichnet durch** die Darstellung des Blockcopolymers **durch** eine Trithiocarbonat-kontrollierte radikalische Polymerisation.

## Claims

1. Pressure sensitive adhesive based on block copolymers, said block copolymers having at least one unit composed of three successive polymer blocks, said three successive polymer blocks being chosen in alternation from the group of the polymer blocks P(A) and P(B), **characterized in that**
- P(A) represents a homopolymer or copolymer block obtainable from a component A which is composed of at least two monomers A1, A2, the polymer block P(A) having a softening temperature of from -80°C to 0°C,
- at least one (A1) of the monomers of component A is an acrylic or methacrylic acid derivative of the general formula
CH₂=C(R^{I}) (COOR^{II}) (I)
in which R^{I} = H or CH₃ and R^{II} is an aliphatic, linear, branched or cyclic, unsubstituted or substituted, saturated or unsaturated, alkyl radical having from 1 to 20 carbon atoms,
- at least one further (A2) of the monomers of component A is an acrylated macromonomer of the general formula
CH₂=C (R^{III}) (COOR^{IV}) (II)
in which R^{III} = H or CH₃ and R^{IV} is an aliphatic, linear, branched or cyclic, unsubstituted or substituted, saturated or unsaturated alkyl radical having more than 30 carbon atoms, and the average molecular weight Mₙ of said at least one macromonomer is between 492 g/mol and 30 000 g/mol,
- P(B) represents a homopolymer or copolymer block obtainable from a component B which is composed of at least one monomer B1, the polymer block P(B) having a softening temperature of from 20°C to 175°C, and
- the polymer blocks P(A) are not homogeneously miscible with the polymer blocks P(B).

2. Pressure sensitive adhesive according to Claim 1, **characterized in that** at least one vinyl compound containing functional groups is additionally used as monomer A3 for component A.

3. Pressure sensitive adhesive according to at least one of the preceding claims, **characterized in that** component A has the following composition:
- from 35 to 97% by weight acrylic acid and/or methacrylic acid derivatives corresponding to monomer A1,
- from 3 to 40% by weight macromonomers corresponding to monomer A2,
- from 0 to 25% by weight vinyl compounds corresponding to monomer A3.

4. Pressure sensitive adhesive according to at least one of the preceding claims, **characterized in that** for the monomer A1 the radical R^{II} chosen is an alkyl radical as defined having from 4 to 14 carbon atoms.

5. Pressure sensitive adhesive according to at least one of the preceding claims, **characterized in that** as monomer A2 use is made of hydrogenated ethylene/propylene macromonomers and/or hydrogenated ethylene/butylene macromonomers which possess a softening temperature of not more than 0°C and carry an acrylate or methacrylate function as end group.

6. Pressure sensitive adhesive according to at least one of the preceding claims, **characterized in that** at least one of the monomers of component A is chosen such that it contains one or more functional groups which can be used for a crosslinking reaction of the block copolymers, especially for a thermal or radiation-chemical crosslinking, and, very particularly, for a crosslinking which is induced and/or assisted by UV radiation or by irradiation with electron beams.

7. Pressure sensitive adhesive according to at least one of the preceding claims, **characterized in that** at least one of the monomers of component A is chosen from the group of those acrylic derivatives which contain at least one double bond which does not react during a radical polymerization.

8. Pressure sensitive adhesive according to at least one of the preceding claims, **characterized in that** said at least one monomer B1 is chosen such that the polymer blocks P (B) are capable of forming a two-phase domain structure with the copolymer blocks P(A).

9. Pressure sensitive adhesive according to at least one of the preceding claims, **characterized in that** the block copolymers have an average molecular weight Mₙ (numerical average) of between 5 000 and 600 000 g/mol, in particular between 80 000 and 450 000 g/mol.

10. Pressure sensitive adhesive according to at least one of the preceding claims, **characterized in that** the fraction of the polymer blocks P(B) is between 10 and 60% by weight, in particular between 15 and 40% by weight, of the overall block copolymers.

11. Pressure sensitive adhesive according to at least one of the preceding claims, **characterized in that** up to 50% by weight, in particular from 20 to 40% by weight, of resins, and/or **in that** additives, especially crosslinkers, aging inhibitors, light stabilizers, ozone protectants, fatty acids, plasticizers, nucleators, expandants, accelerators and/or fillers, are added.

12. Use of a pressure sensitive adhesive according to at least one of the preceding claims for an adhesive tape provided on one or both sides with said pressure sensitive adhesive, especially for an adhesive tape for bonds to apolar surfaces, the pressure sensitive adhesive being applied, preferably from the melt, as a one-side or both-sides film to a backing.

13. Process for preparing a pressure sensitive adhesive according to at least one of the preceding claims, **characterized by** preparing the block copolymer by means of a trithiocarbonate-controlled radical polymerization.

## Revendications

1. Masse autoadhésive à base de copolymères à blocs, les copolymères à blocs présentant au moins une unité formée de trois blocs polymères consécutifs, où les trois blocs polymères consécutifs sont choisis alternativement dans le groupe des blocs polymères P(A) et P(B), **caractérisée en ce que**
- P(A) représente un bloc homopolymère ou copolymère pouvant être obtenu à partir d'un composant A qui est constitué par au moins deux monomères A1, A2, le bloc polymère P(A) présentant une température de ramollissement de -80°C à 0°C,
- au moins un monomère (A1) des monomères du composant A représente un dérivé d'acide acrylique ou méthacrylique de formule générale
CH₂=C (R^{I}) (COOR^{II}) (I)
où R^{I} = H ou CH₃ et R^{II} représente un radical alkyle aliphatique, linéaire, ramifié ou cyclique, non substitué ou substitué, saturé ou insaturé, comprenant 1 à 20 atomes de carbone,
- au moins un autre monomère (A2) des monomères du composant A représente un macromonomère acrylé selon la formule générale
CH₂=C (R^{III}) (COOR^{IV}) (II)
où R^{III} = H ou CH₃ et R^{IV} représente un radical alkyle aliphatique, linéaire, ramifié ou cyclique, non substitué ou substitué, saturé ou insaturé, comprenant plus de 30 atomes de carbone et où le poids moléculaire moyen M_{N} dudit au moins un macromonomère est situé entre 492 g/mole et 30 000 g/mole,
- P(B) représente un bloc homopolymère ou copolymère pouvant être obtenu à partir d'un composant B, qui est constitué par au moins un monomère B1, le bloc polymère P(B) présentant une température de ramollissement de 20°C à 175°C,
- les blocs polymères P (A) ne sont pas miscibles de manière homogène avec les blocs polymères P(B).

2. Masse autoadhésive selon la revendication 1, **caractérisée en ce qu'**on utilise comme monomère A3 pour le composant A en outre au moins un composé de vinyle avec des groupes fonctionnels.

3. Masse autoadhésive selon au moins l'une quelconque des revendications précédentes, **caractérisée en ce que** le composant A est constitué comme suit :
- 35 à 97% en poids de dérivés d'acide acrylique et/ou méthacrylique correspondant au monomère A1,
- 3 à 40% en poids de macromonomères correspondant au monomère A2,
- 0 à 25% en poids de composés de vinyle correspondant au monomère A3.

4. Masse autoadhésive selon au moins l'une quelconque des revendications précédentes, **caractérisée en ce que** dans le sens du monomère A1, on choisit comme radical R^{II} un radical alkyle (tel que **caractérisé**) comprenant 4 à 14 atomes de carbone.

5. Masse autoadhésive selon au moins l'une quelconque des revendications précédentes, **caractérisée en ce que** qu'on utilise, dans le sens du monomère A2, des macromonomères d'éthylène/propylène hydrogénés et/ou des macromonomères d'éthylène/butylène hydrogénés, qui présentent une température de ramollissement qui n'est pas supérieure à 0°C et qui portent comme groupe terminal une fonction acrylate ou méthacrylate.

6. Masse autoadhésive selon au moins l'une quelconque des revendications précédentes, **caractérisée en ce qu'**au moins un des monomères du composant A est choisi de telle manière qu'il présente un ou plusieurs groupes fonctionnels, qui peuvent être utilisés pour une réaction de réticulation pour des copolymères à blocs, en particulier pour une réticulation thermique ou chimique par des rayons, tout particulièrement pour une réticulation qui est provoquée et/ou soutenue par des rayons UV ou par une irradiation par des rayons électroniques.

7. Masse autoadhésive selon au moins l'une quelconque des revendications précédentes, **caractérisée en ce qu'**au moins un des monomères du composant. A est choisi dans le groupe des dérivés acryliques qui présentent au moins une double liaison qui ne réagit pas pendant une polymérisation radicalaire.

8. Masse autoadhésive selon au moins l'une quelconque des revendications précédentes, **caractérisée en ce qu'**au moins un monomère B1 est choisi de manière telle que les blocs polymères P(B) sont en mesure de former une structure de domaines à deux phases avec les blocs copolymères P(A).

9. Masse autoadhésive selon au moins l'une quelconque des revendications précédentes, **caractérisée en ce que** les copolymères à blocs présentent un poids moléculaire moyen M_{N} (moyenne numérique) entre 5000 et 600 000 g/mole, en particulier entre 80 000 et 450 000 g/mole.

10. Masse autoadhésive selon au moins l'une quelconque des revendications précédentes, **caractérisée en ce que** la proportion des blocs polymères P(B) est située entre 10 et 60% en poids, en particulier entre 15 et 40% en poids de la totalité du copolymère à blocs.

11. Masse autoadhésive selon au moins l'une quelconque des revendications précédentes, **caractérisée en ce que** jusqu'à 50% en poids, en particulier 20 à 40% en poids, de résines et/ou **en ce que** des additifs, en particulier des réticulants, des agents de protection contre le vieillissement, des agents de protection contre la lumière, des agents de protection contre l'ozone, des acides gras, des plastifiants, des agents de formation de germes, des agents gonflants, des accélérateurs et/ou des charges, sont ajoutés.

12. Utilisation d'une masse autoadhésive selon au moins l'une quelconque des revendications précédentes pour une bande adhésive apprêtée sur une ou les deux faces avec la masse autoadhésive, en particulier pour une bande adhésive destinée à des collages sur des surfaces non polaires, la masse autoadhésive étant appliquée - de préférence à partir de la masse fondue - sous forme d'un film simple ou double face sur un support.

13. Procédé pour la préparation d'une masse autoadhésive selon au moins l'une quelconque des revendications précédentes, **caractérisé par** la préparation du copolymère à blocs par une polymérisation radicalaire contrôlée par du trithiocarbonate.
